# EUROPEAN PATENT APPLICATION

(11) **EP 4 039 880 A1**
(43) Date of publication of application: **10.08.2022**
(21) Application number: 22162992.6
(22) Date of filing: 26.04.2011
(51) Int. Cl.: D21C 9/00, D21H 11/18, D21H 17/67

(54) **PROCESS FOR THE MANUFACTURE OF STRUCTURED MATERIALS USING NANO-FIBRILLAR CELLULOSE GELS**

(30) Priority: 27.04.2010 EP 10161166; 04.05.2010 US 34377510 P
(62) Divisional of application: 18152927.2
(71) Applicant: FiberLean Technologies Limited, Par, Cornwall PL24 2SQ (GB)
(72) Inventor: GANE, Patrick A.C., Cornwall, Par, PL24 2SQ (GB); SCHENKER, Michel, Cornwall, Par, PL24 2SQ (GB); SUBRAMANIAN, Ramjee, Cornwall, Par, PL24 2SQ (GB); SCHOELKOPF, Joachim, Cornwall, Par, PL24 2SQ (GB)
(74) Representative: EDP Patent Attorneys B.V.

(57) **Abstract**

A process for manufacturing structured material by providing cellulose fibres and at least one filler and/or pigment, combining the cellulose fibres and the at least one filler and/or pigment, fibrillating the cellulose fibres in the presence of the at least one filler and/or pigment until a gel is formed, subsequently providing additional non-fibrillated fibres, and combining the gel with the additional non-fibrillated fibres.

## Description

The present invention relates to a process for the production of structured materials as well as the structured materials obtained by this process.

In many technical fields, mixtures of materials are used in order to control or improve certain properties of a product. Such material blends may be, e.g. in the form of loose mixtures, or in the form of composite structures.

A composite material is basically a combination of two or more materials, each of which retains its own distinctive properties. The resulting material has characteristics that are not characteristic of the components in isolation. Most commonly, composite materials have a bulk phase, which is continuous, called the matrix; and a dispersed, non-continuous, phase called the reinforcement. Some other examples of basic composites include concrete (cement mixed with sand and aggregate), reinforced concrete (steel rebar in concrete), and fibreglass (glass strands in a resin matrix).

The following are some of the reasons why composites are selected for certain applications:
- High strength to weight ratio (low density high tensile strength)
- High creep resistance
- High tensile strength at elevated temperatures
- High toughness

Typically, reinforcing materials are strong, while the matrix is usually a ductile, or tough, material. If the composite is designed and fabricated correctly, it combines the strength of the reinforcement with the toughness of the matrix to achieve a combination of desirable properties not available in any single conventional material. For example: polymer/ceramic composites have a greater modulus than the polymer component, but are not as brittle as ceramics.

Since the reinforcement material is of primary importance in the strengthening mechanism of a composite, it is convenient to classify composites according to the characteristics of the reinforcement. The following three categories are commonly used:
a) "fibre reinforced", wherein the fibre is the primary load-bearing component.
b) "particle reinforced", wherein the load is shared by the matrix and the particles.
c) "dispersion strengthened", wherein the matrix is the major load-bearing component.
d) "structural composites", wherein the properties depend on the constituents, and the geometrical design.

Generally, the strength of the composite depends primarily on the amount, arrangement and type of fibre (or particle) reinforcement in the resin. In addition, the composite is often formulated with fillers and additives that change processing or performance parameters.

Thus, in the prior art, it is generally known to combine different materials in order to obtain materials having modified properties or being able to control certain properties of a material to which they are applied, and there is a continuous need for such materials allowing for the tailor-made control of material characteristics, as well as regarding their cost-efficiency and environmental compliance.

An important field in this respect is the production of structured material and their properties.

One example of structured materials is paper, in the manufacture of which a number of different materials are combined, each of which can positively or negatively influence the properties of the other components, or the final paper.

One of the most common groups of additives in the field of paper manufacturing and finishing are fillers having several advantageous functions in paper. For example, fillers are used for reasons of opacity or the provision of a smoother surface by filling the voids between the fibres.

There are, however, limitations with respect to the amount of fillers, which can be added to the paper, as increasing filler amounts in conventional paper leads to an inverse relationship between the strength and optical properties.

Thus, conventional paper may contain a certain amount of fillers, but if the filler content is too high, the mechanical properties of the paper will significantly decrease.

Several approaches have been proposed to improve this relationship and to produce a highly filled paper having good optical as well as mechanical properties, but there is still a need for processes for manufacturing paper allowing for a higher filler content as commonly used without essentially impairing the paper strength.

Searching for methods for controlling the properties of structured materials or of products containing such structured materials, it was found that special nano-fibrillar cellulosic gels comprising calcium carbonate can be useful.

Cellulose is the structural component of the primary cell wall of green plants and is the most common organic compound on Earth. It is of high interest in many applications and industries.

Cellulose pulp as a raw material is processed out of wood or stems of plants such as hemp, linen and manila. Pulp fibres are built up mainly by cellulose and other organic components (hemicellulose and lignin). The cellulose macromolecules (composed of 1-4 glycosidic linked β-D-Glucose molecules) are linked together by hydrogen bonds to form a so called primary fibril (micelle) which has crystalline and amorphous domains. Several primary fibrils (around 55) form a so called microfibril. Around 250 of these microfibrils form a fibril.

The fibrils are arranged in different layers (which can contain lignin and/or hemicellulose) to form a fibre. The individual fibres are bound together by lignin as well.

When fibres become refined under applied energy they become fibrillated as the cell walls are broken and torn into attached strips, i.e. into fibrils. If this breakage is continued to separate the fibrils from the body of the fibre, it releases the fibrils. The breakdown of fibres into microfibrils is referred to as "microfibrillation". This process may be continued until there are no fibres left and only fibrils of nano size (thickness) remain.

If the process goes further and breaks these fibrils down into smaller and smaller fibrils, they eventually become cellulose fragments or nano-fibrillar gels. Depending on how far this last step is taken some nano-fibrils may remain amongst the nano-fibrillar gels. The breakdown to primary fibrils may be referred to as "nano-fibrillation", where there may be a smooth transition between the two regimes. The primary fibrils form in an aqueous environment a gel (meta stable network of primary fibrils) which may be referred to as "nano-fibrillar gel". The gel formed from the nano-fibrils can be considered to contain nanocellulose.

Nano-fibrillar gels are desirable as they usually contain very fine fibrils, considered to be constituted in part of nanocellulose, showing a stronger binding potential to themselves, or to any other material present, than do fibrils which are not so fine or do not exhibit nanocellulosic structure.

From unpublished European patent application No. 09 156 703.2, nano-fibrillar cellulose gels are known. However, there is no teaching with respect to their effects in structured materials.

It has now been found that such nano-fibrillar cellulose gels can be useful in the production and control, especially of the mechanical properties, of structured materials.

Thus, the above problem is solved by a process for manufacturing structured materials, which is characterized by the following steps:
a) providing cellulose fibres;
b) providing at least one filler and/or pigment;
c) combining the cellulose fibres of step a) and the at least one filler and/or pigment of step b);
d) fibrillating the cellulose fibres in the presence of the at least one filler and/or pigment until a gel is formed;
e) providing additional non-fibrillated fibres;
f) combining the gel of step d) with the fibres of step e).

Nano-fibrillar cellulose in the context of the present invention means fibres, which are at least partially broken down to primary fibrils. If these primary fibrils are in an aqueous environment, a gel (meta stable network of primary fibrils considered in the limit of fineness to be essentially nanocellulose) is formed, which is designated as "nano-fibrillar gel", wherein there is a smooth transition between nano fibres and nano-fibrillar gel, comprising nano-fibrillar gels containing a varying extent of nano-fibrils, all of which are comprised by the term nano-fibrillar cellulose gels according to the present invention.

In this respect, fibrillating in the context of the present invention means any process which predominantly breaks down the fibres and fibrils along their long axis resulting in the decrease of the diameter of the fibres and fibrils, respectively.

According to the process of the present invention, the fibrillation of cellulose fibres in the presence of at least one filler and/or pigment provides a nano-fibrillar cellulose gel. The fibrillation is performed until the gel is formed, wherein the formation of the gel is verified by the monitoring of the viscosity in dependence of the shearing rate. Upon step-wise increase of the shearing rate a certain curve reflecting a decrease of the viscosity is obtained. If, subsequently the shearing rate is step-wise reduced, the viscosity increases again, but the corresponding values over at least part of the shear rate range as shearing approaches zero are lower than when increasing the shearing rate, graphically expressed by a hysteresis manifest when the viscosity is plotted against the shearing rate. As soon as this behaviour is observed, a nano-fibrillar cellulose gel according to the present invention is formed. Further details with respect to the production of the nano-fibrillar cellulose gel can be taken from unpublished European patent application No. 09 156 703.

Cellulose fibres, which can be used in the process of the present invention may be such contained in natural, chemical, mechanical, chemimechanical, thermomechanical pulps. Especially useful are pulps selected from the group comprising eucalyptus pulp, spruce pulp, pine pulp, beech pulp, hemp pulp, cotton pulp, bamboo pulp, bagasse and mixtures thereof. In one embodiment, all or part of this cellulose fibre may be issued from a step of recycling a material comprising cellulose fibres. Thus, the pulp may also be recycled and/or deinked pulp.

The size of the cellulose fibres in principle is not critical. Useful in the present invention generally are any fibres commercially available and processable in the device used for their fibrillation. Depending on their origin, cellulose fibres may have a length of from 50 mm to 0.1 µm. Such fibres, as well as such having a length of preferably 20 mm to 0.5 µm, more preferably from 10 mm to 1 mm, and typically from 2 to 5 mm, can be advantageously used in the present invention, wherein also longer and shorter fibres may be useful.

It is advantageous for the use in the present invention that the cellulose fibres of step a) are provided in the form of a suspension, especially an aqueous suspension. Preferably, such suspensions have a solids content of from 0.2 to 35 wt%, more preferably 0.25 to 10 wt%, even more preferably 0.5 to 5 wt%, especially 1 to 4 wt%, most preferably 1.3 to 3 wt%, e.g. 1.5 wt%.

The additional non-fibrillated fibres of step e) preferably are selected from cellulose fibres as defined above, as well. However, also other fibre materials may be advantageously used as additional non-fibrillated fibres in the process of the process of the present invention.

The at least one filler and/or pigment is selected from the group comprising precipitated calcium carbonate (PCC); natural ground calcium carbonate (GCC); surface modified calcium carbonate; dolomite; talc; bentonite; clay; magnesite; satinwhite; sepiolite, huntite, diatomite; silicates; and mixtures thereof. Precipitated calcium carbonate, which may have vateritic, calcitic or aragonitic crystal structure, and/or natural ground calcium carbonate, which may be selected from marble, limestone and/or chalk, are especially preferred.

In a special embodiment, the use of ultrafine discrete prismatic, scalenohedral or rhombohedral precipitated calcium carbonate may be advantageous.

The filler(s) and/or pigment(s) can be provided in the form of a powder, although they are preferably added in the form of a suspension, such as an aqueous suspension. In this case, the solids content of the suspension is not critical as long as it is a pumpable liquid.

In a preferred embodiment, filler and/or pigment particles of step b) have a median particle size of from 0.01 to 15 µm, preferably 0.1 to 10 µm, more preferably 0.3 to 5 µm, especially from 0.5 to 4 µm and most preferably 0.7 to 3.2 µm, e.g. 2 µm.

For the determination of the weight median particle size dso, for particles having a dso greater than 0.5 µm, a Sedigraph 5100 device from the company Micromeritics, USA was used. The measurement was performed in an aqueous solution of 0.1 wt-% Na₄P₂O₇. The samples were dispersed using a high-speed stirrer and ultrasound. For the determination of the volume median particle size for particles having a d₅₀ ≤ 500 nm, a Malvern Zetasizer Nano ZS from the company Malvern, UK was used. The measurement was performed in an aqueous solution of 0.1 wt% Na₄P₂O₇. The samples were dispersed using a high-speed stirrer and ultrasound.

In view of the advantageous effect of the addition of nano-fibrillar cellulosic gels with respect to mechanical paper properties even at high pigment and/or filler contents, in an especially preferred embodiment, before, during or after the addition of further fibres in step e), but after step d) and before step f), at least one further filler and/or pigment is added.

This at least one further filler and/or pigment may be the same or a different filler and/or pigment of step b) selected from the group comprising precipitated calcium carbonate (PCC); natural ground calcium carbonate (GCC); surface modified calcium carbonate; dolomite; talc; bentonite; clay; magnesite; satin white; sepiolite, huntite, diatomite; silicates; and mixtures thereof. Precipitated calcium carbonate, which may have vateritic, calcitic or aragonitic crystal structure, and/or natural ground calcium carbonate, which may be selected from marble, limestone and/or chalk, are especially preferred.

In a special embodiment, the use of ultrafine discrete prismatic, scalenohedral or rhombohedral precipitated calcium carbonate may be advantageous.

Also these additional filler(s) and/or pigment(s) can be provided in the form of a powder, although they are preferably added in the form of a suspension, such as an aqueous suspension. In this case, the solids content of the suspension is not critical as long as it is a pumpable liquid.

It has however turned out especially advantageous, if the at least one further filler and/or pigment is a rather fine product in terms of the particle size, and especially preferably comprises at least a fraction of particles having a median diameter dso in the nanometer range, contrary to the pigment(s) and/or filler(s) used in the gel formation, which are rather coarse ones.

Thus, it is furthermore preferred that the at least one further filler and/or pigment particles have a median particle size of from 0.01 to 5 µm, preferably 0.05 to 1.5 µm, more preferably 0.1 to 0.8 µm and most preferably 0.2 to 0.5 µm, e.g. 0.3 µm, wherein the particle size is determined as mentioned above.

Any one of the fillers and/or pigments used in the present invention may be associated with dispersing agents such as those selected from the group comprising homopolymers or copolymers of polycarboxylic acids and/or their salts or derivatives such as esters based on, e.g., acrylic acid, methacrylic acid, maleic acid, fumaric acid, itaconic acid, e.g. acryl amide or acrylic esters such as methylmethacrylate, or mixtures thereof; alkali polyphosphates, phosphonic-, citric- and tartaric acids and the salts or esters thereof; or mixtures thereof.

The combination of fibres and at least one filler and/or pigment of step b) can be carried out by adding the filler and/or pigment to the fibres in one or several steps. As well, the fibres can be added to the filler and/or pigment in one or several steps. The filler(s) and/or pigment(s) of step b) as well as the fibres of step a) can be added entirely or in portions before or during the fibrillating step. However, the addition before fibrillation is preferred.

During the fibrillation process, the size of the filler(s) and/or pigment(s) as well as the size of the fibres can change.

Preferably, the weight ratio of fibres to filler(s) and/or pigment(s) of step b) on a dry weight basis is from 1:33 to 10:1, more preferably 1:10 to 7:1, even more preferably 1:5 to 5:1, typically 1:3 to 3:1, especially 1:2 to 2:1 and most preferably 1:1.5 to 1.5:1, e.g. 1:1.

The dosage of filler and/or pigment in step b) may be critical. If there is too much of the filler and/or pigment, this may influence the formation of the gel. Thus, if no gel formation is observed in specific combination, it might be necessary to reduce the amount of filler and/or pigment.

Furthermore, in one embodiment, the combination is stored for 2 to 12 hours, preferably 3 to 10 hours, more preferably 4 to 8 hours, e.g. 6 hours, prior to fibrillating it, as this ideally results in swelling of the fibres facilitating the fibrillation.

Fibre swelling may be facilitated by storage at increased pH, as well as by addition of cellulose solvents like e.g. copper(II)ethylenediamine, iron-sodium-tartrate or lithium-chlorine/dimethylacetamine, or by any other method known in the art.

Fibrillating is carried out by means of any device useful therefore. Preferably the device is a homogenizer. It may also be an ultra fine friction grinder such as a Supermasscolloider from Masuko Sangyo Co. Ltd, Japan or one as described in US 6,214,163 or US 6,183,596.

Suitable for the use in the present invention are any commercially available homogenizers, especially high pressure homogenizers, wherein the suspensions are pressed under high pressure through a restricted opening, which may comprise a valve, and are discharged from the restricted opening at high pressure against a hard impact surface directly in front of the restricted opening, thus reducing the particle size. The pressure may be generated by a pump such as a piston pump, and the impact surface may comprise an impact ring extending around the annular valve opening. An example for an homogenizer, which can be used in the present invention is Ariete NS2006L of GEA Niro Soavi. However, inter alia, also homogenizers such as of the APV Gaulin Series, HST HL Series or the Alfa Laval SHL Series can be used.

Furthermore, devices such as ultra-fine friction grinders, e.g. a Supermasscolloider, can be advantageously used in the present invention.

The structured material can be produced by mixing the nano-fibrillar cellulosic gel and additional non-fibrillated fibres, as well as, optionally, further filler and/or pigment, and subsequently dewatering the combination to form a base structure such as e.g. a base paper sheet.

In this respect, generally any commonly used method of dewatering known to the person skilled in the art, may be used, such as e.g. heat drying, pressure drying, vacuum drying, freeze drying, or drying under supercritical conditions. The dewatering step may be carried out in well-known devices such as in a filter press, e.g. as described in the Examples. Generally, other methods that are well known in the field of moulding of aqueous systems can be applied to obtain the inventive composites.

In a special embodiment, the additional non-fibrillated fibres may be provided in the form of a preformed fibre structure such as a fibre web and to combine this structure with the gel, as well as, optionally, with further filler and/or pigment, resulting in the at least partial coating of the fibre structure by the gel.

Generally, the structured material, as well as any layers of fibre structure, e.g. fibre web and gel, in this respect can have varying thicknesses.

By varying the thickness of the structured materials, and, optionally, of the different layers of the resulting structured material allows for the control of the properties of the material as well as of the product to which the material is applied.

Thus, the structured material according to the present invention may be as thin as a film, may have a thickness which is typically found in conventional papers, but also may be as thick as boards, and even may have the form of compact blocks, inter alia depending on the ratio of fibres and gel.

For example, in paper production, it is advantageous that the structured material, and the layers thereof, respectively, are rather thin. Thus, it is preferred that the fibre layer has a thickness of 0.02 mm to 0.23 mm, and one or more gel layers have a thickness of 0.005 mm to 0.15 mm, wherein the total thickness of the structured material is of 0.05 mm to 0.25 mm.

With respect to paper applications, it has been found that the combination of the cellulosic nano-fibrillar gel with the fibres for forming the paper has a considerable influence on the properties of the paper with respect to the filler load.

Thus, it is an especially preferred embodiment that the structured material is a paper.

In this respect, the addition of only a minimal amount of nano-fibrillar cellulosic gel is necessary. The amount of nano-fibrillar cellulosic gel in paper applications expressed by the cellulosic content of the gel in relation to the additional non-fibrillated fibres (dry/dry weight basis) may be about 0.5 to 20 wt%, preferably 1 to 15 wt%, 2 to 10 wt%, 3 to 6 wt%, e.g. 5 wt%.

Thus, it is possible to form a paper sheet comprising the gel in the base paper and/or in a layer coating the fibre web resulting in layered structures of paper-forming fibres and gels.

Papers, which can be manufactured and improved with respect to an increase of the amount of filler by the process of the present invention are papers, which are preferably selected from, but not limited to printing and writing paper, as well as newspapers.

Furthermore, by the process of the present invention it is even possible to introduce filler in tissue paper.

Thus, by the process of the present invention a more efficient use of poor grade fibres is achieved. By the addition of nano-fibrillar cellulosic gel to base furnishes containing fibres deficient in imparting strength to the final fibre-based product, the paper strength can be improved.

Regarding the total content of filler and/or pigment in the paper, it is especially preferred that the filler and/or pigments are present in an amount of from 1 wt% to 60 wt%, preferably from 5 wt% to 50 wt%, more preferably from 10 to 45 wt%, even more preferably from 25 wt% to 40 wt%, especially from 30 to 35 wt% on a dry weight basis of the structured material.

The use of the nano-fibrillar cellulose gels as defined above for the production of structured material is a further aspect of the invention, wherein the gel is combined with additional non-fibrillated fibres and the resulting combination is dewatered.

Another aspect of the present invention is the structured material obtained by the process according to the invention, or by the use of the nano-fibrillar cellulose gels for the production of structured material as mentioned.

Due to their mechanical strength properties the nano-fibrillar cellulose gels can be advantageously used in applications such as in material composites, plastics, paints, rubber, concrete, ceramics, pannels, housings, foils and films, coatings, extrusion profiles, adhesives, food, or in wound-healing applications.

The figures described below, and the examples and experiments, serve to illustrate the present invention and should not restrict it in any way.

### Description of the figures:

Figure 1 shows a comparison of handsheets of the prior art and according to the invention containing GCC as a filler with respect to breaking lengths.
Figure 2 shows a comparison of handsheets of the prior art and according to the invention containing GCC as a filler with respect to stretch at rupture.
Figure 3 shows a comparison of handsheets of the prior art and according to the invention containing GCC as a filler with respect to tensile index.
Figure 4 shows a comparison of handsheets of the prior art and according to the invention containing GCC as a filler with respect to modulus of elasticity.
Figure 5 shows a comparison of handsheets of the prior art and according to the invention containing GCC as a filler with respect to tear growth length.
Figure 6 shows a comparison of handsheets of the prior art and according to the invention containing GCC as a filler with respect to internal bond.
Figure 7 shows a comparison of handsheets of the prior art and according to the invention containing GCC as a filler with respect to opacity.
Figure 8 shows a comparison of handsheets of the prior art and according to the invention containing GCC as a filler with respect to scattering.
Figure 9 shows a comparison of handsheets of the prior art and according to the invention containing GCC as a filler with respect to absorbency.
Figure 10 shows a comparison of handsheets of the prior art and according to the invention containing GCC as a filler with respect to air resistance.
Figure 11 shows a comparison of handsheets of the prior art and according to the invention containing PCC as a filler with respect to breaking lengths.
Figure 12 shows a comparison of handsheets of the prior art and according to the invention containing PCC as a filler with respect to stretch at rupture.
Figure 13 shows a comparison of handsheets of the prior art and according to the invention containing PCC as a filler with respect to tensile index.
Figure 14 shows a comparison of handsheets of the prior art and according to the invention containing PCC as a filler with respect to tear growth work.
Figure 15 shows a comparison of handsheets of the prior art and according to the invention containing PCC as a filler with respect to internal bond strength.
Figure 16 shows a comparison of handsheets of the prior art and according to the invention containing PCC as a filler with respect to opacity.
Figure 17 shows a comparison of handsheets of the prior art and according to the invention containing PCC as a filler with respect to light scattering.
Figure 18 shows a comparison of handsheets of the prior art and according to the invention containing PCC as a filler with respect to air permeance.

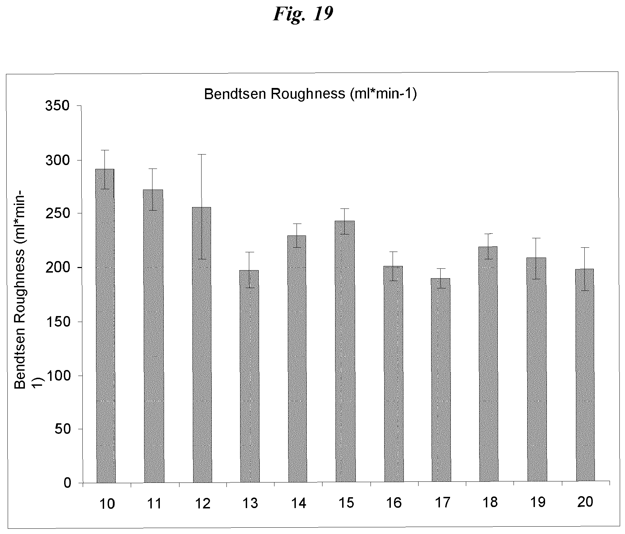

Figure 19 shows a comparison of handsheets of the prior art and according to the invention containing PCC as a filler with respect to Bendtsen roughness.

### EXAMPLES

In the context of the present invention the following terms are used:
- solid content [wt%] meaning the overall solids, i.e. any non-volatile material (here essentially pulp/cellulose and filler)
- cellulosic solid content [wt%] meaning the fraction of cellulosic material on the total mass only, i.e. pulp before fibrillation, or nano-cellulose after fibrillation. The value can be calculated using the overall solids content and the ratio of filler to pulp.
- Addition levels (ratios) of gels in compositions (e.g. hand sheets): Any percentages are to be understood as wt% of the dry cellulosic content (see above) on the total mass of the composition (the hand sheet is 100 wt%)
- Density, thickness and bulk was determined according to ISO 534, Grammage was determined according to ISO 536, Clima control was carried out according to ISO 187:1997.

### 1. Nano-fibrillar cellulosic gel with standard GCC fillers

### Material

### Filler (gel):

- Omyacarb^{®} 1 AV (OC 1 AV) (dry powder)
- Omyacarb^{®} 10 AV (OC 10 AV) (dry powder)

Both available from Omya AG; Fine calcium carbonate powder, manufactured from a high purity, white marble; The weight median particle size *d*₅₀ is 1.7 or 10 µm, respectively, measured by Malvern Mastersizer X.
- Hydrocarb^{®} 60 AV (HC 60 AV) (dispersed product)
   available from Omya AG: Selected, natural ground calcium carbonate (marble), microcrystalline, rhombrohedral particle shape of high fineness in the form of a predispersed slurry. The weight median particle size *d*₅₀ is 1.6 µm, measured by Sedigraph 5100. Suspension solids = 78 wt%.

### Pulp (gel):

Dried pine mats, brightness: 88.19%, TCF bleached
Dried Eucalyptus, brightness: 88.77%, TCF bleached
Non dried pine, brightness: 88.00%

### Filler (hand sheets):

- Hydrocarb^{®} HO - ME (dispersed product)
   available from Omya AG; Selected, natural ground calcium carbonate (marble), microcrystalline, rhombohedral particle shape of high fineness in the form of a predispersed slurry (solids content 62 wt%); The weight median particle size *d*₅₀ is 0.8 µm measured by Sedigraph 5100.

### Pulp (hand sheets):

- 80 wt% short fibre (birch) / 20 wt% long fibre (pine), freeness: 23 °SR (Brightness: 88.53%)

### Retention aid:

Polyimin 1530 (available from BASF)

### Gel Formation

The gels were processed with an ultra-fine friction grinder (Supermasscolloider from Masuko Sangyo Co. Ltd, Japan (Model MKCA 6-2) with mounted silicon carbide stones having a grit class of 46 (grit size 297 - 420 µm). The dynamic 0-point was adjusted as described in the manual delivered by the supplier (the zero point is defined as the touching point of the stones, so there the gap between the stones is 0 mm). The speed of the rotating grinder was set to 1500 rpm.

The suspensions to be fibrillated were prepared as follows: 80 g of the dry mat pulp was torn into pieces of 40 x 40 mm and 3920 g tap water were added. In the case where wet pulp was used, 800 g of pulp (solids content: 10 wt%) were mixed with 3200 g of tap water.

Each of the suspensions was stirred in a 10 dm³ bucket at 2000 rpm using a dissolver disk with a diameter of 70 mm. The suspensions were stirred for at least 10 minutes at 2000 rpm.

At first, the pulp was disintegrated by passing it two times through the grinder with an open stone gap (0 µm). Subsequently, the stone gap was tightened to -200 µm for fibrillating the pulp in two passages. Filler (according to Table 1) was added to this fibrillated pulp suspension, and this mixture was ground by circulating three times with a stone gap of -300 to -400 µm.

**Table 1:**

| **Sample** | **Weight ratio (dry/dry) filler : pulp** | **Filler** | **Pulp** | **Cellulosic solid content [wt%]** |
|---|---|---|---|---|
| **A** | 2 :1 | OC 10 AV | Pine, dried | 2 |
| **B** | 3 :1 | OC 10 AV | Pine, dried | 2 |
| **C** | 3 :1 | OC 1 AV | Pine, wet | 2 |
| **D** | 3 :1 | OC 10 AV | Pine, wet | 2 |
| **E** | 2 :1 | HC 60 AV | Pine, dried | 2 |
| **F** | 10:1 | OC 1 AV | Pine, dried | 2 |

### Hand sheet formation

60 g dry weight of a paste of wood and fibres composed of 80 wt% birch and 20 wt% pine, with a SR value of 23° and the according amount of the nanocellulosic gel (see table 2) is diluted in 10 dm³ of tap water. The filler (Hydrocarb^{®} HO-ME) is added in an amount so as to obtain the desired overall filler content based on the final paper weight (see table 2). After 15 minutes of agitation and following addition of 0.06 % by dry weight, relative to the dry weight of the paper, of a polyacrylamide retention aid, a sheet with a grammage of 80 g/m² is formed using Rapid-Kothen type hand sheet former. Each sheet was dried using Rapid-Kothen type drier.

The filler content is determined by burning a quarter of a dry hand sheet in a muffle furnace heated to 570°C. After burning is completed, the residue is transferred in a desiccator to cool down. When room temperature is reached, the weight of the residue is measured and the mass is related to the initially measured weight of the dry quarter hand sheet.

**Table 2:**

| **Hand sheet No.** | **Base weight [g/m²]** | **Pulp [wt%, dry/dry]** | **Ash (total filler content) [wt%]** | **Gel type (according to table 1) [wt%, dry/dry]** | | | | | |
|---|---|---|---|---|---|---|---|---|---|
| | | | | **A** | **B** | **C** | **D** | **E** | **F** |
| 1 (comparative) | 80 | 80 | 20 | | | | | | |
| 2 (comparative) | 80 | 70 | 30 | | | | | | |
| 3 (invention) | 80 | 67 | 30 | 3 | | | | | |
| 4 (invention) | 80 | 64 | 30 | | 6 | | | | |
| 5 (invention) | 80 | 44 | 50 | | 6 | | | | |
| 6 (invention) | 80 | 67 | 30 | | | 3 | | | |
| 7 (invention) | 80 | 41 | 50 | | | | 9 | | |
| 8 (invention) | 80 | 67 | 30 | | | | | 3 | |
| 9 (invention) | 80 | 67 | 30 | | | | | | 3 |

### Hand sheet testing

Usually, the addition of fillers, while improving the optical properties, has a rather destabilising effect on the mechanical properties of a paper sheet.

However, as can be taken from the following experiments, mechanical properties of a gel containing paper are either comparable or better than those of hand sheets not containing the gel according to the invention, even at higher filler contents, and at the same or better optical properties. Furthermore, the hand sheets have a significantly higher air resistance, which is an advantage with respect to ink penetration and printing.

The hand sheets were tested and characterized as follows:

### 1.Mechanical Properties

The mechanical properties of the hand sheets according to the invention were characterized by their breaking length, stretch at rupture, tensile index, E-modulus, tear growth work, and internal bond.

Breaking length, stretch at rupture, tensile index, and E-modulus (modulus of elasticity) of the hand sheets were determined by the tensile test according to ISO 1924-2. Tear growth work was determined according to DIN 53115. Internal bond was determined according to SCAN-P80:98 / TAPPI T 541 om.

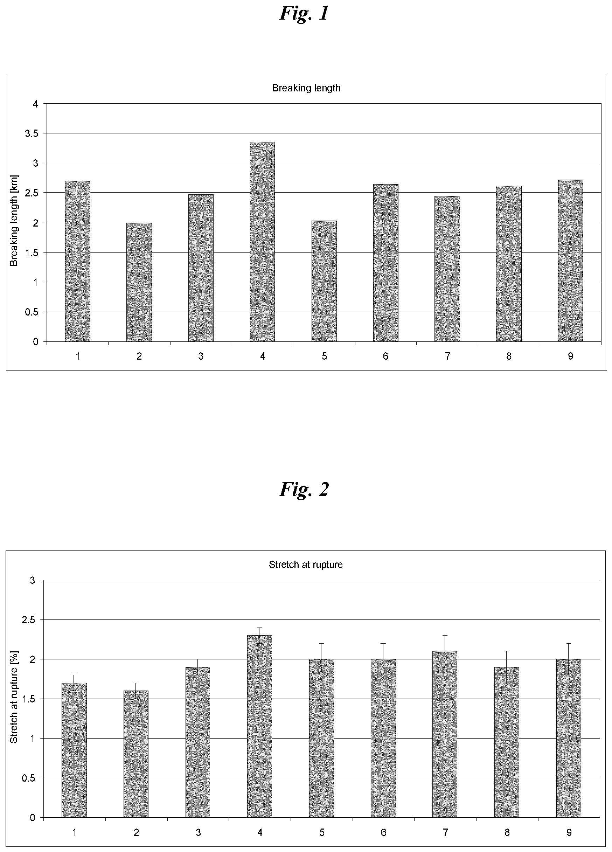

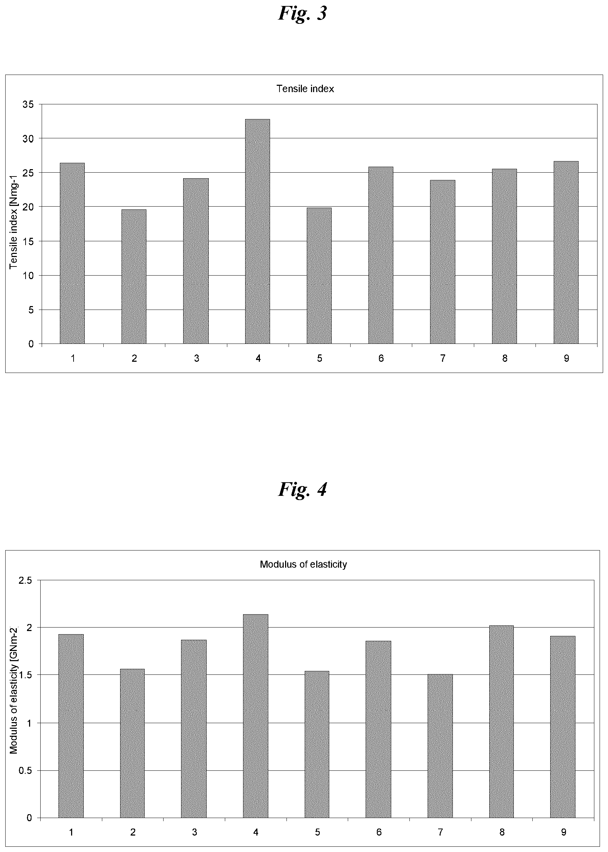

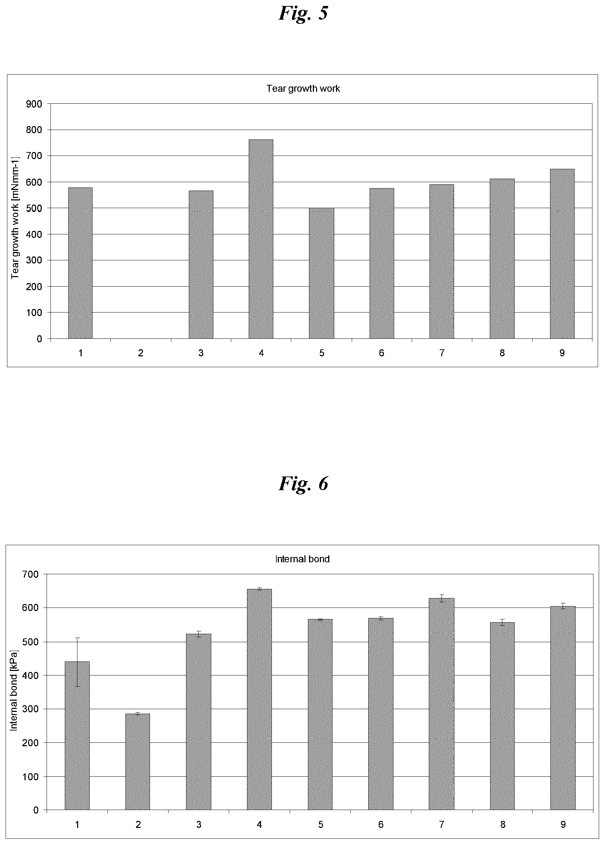

As can be taken from figures 1, 2, 3, 4, 5 and 6, breaking length, stretch at rupture, tensile index, E-modulus, and internal bond values of the comparative hand sheets No. 1 and 2 decrease with increasing filler content.

Looking at the inventive hand sheets, it can be seen that any one of the hand sheets No. 3, 4, 6, 8 and 9 containing 30 wt% filler, but additional gel, have better breaking lengths, stretch at rupture, tensile index, E-modulus, tear growth work, and internal bond properties than comparative hand sheet No. 2.

Even hand sheets No. 5 and 7 containing filler in an amount as high as 50 wt% and gel according to the invention have comparable or better breaking length, stretch at rupture, tensile index, E-modulus, tear growth work, and internal bond properties than the comparative hand sheets having a much lower filler content.

### 2. Optical Properties

The optical properties of the hand sheets according to the invention were characterized by their opacity, light scattering, and light absorbency.

Opacity of the hand sheets was determined according to DIN 53146. Scattering and absorbency were determined according to DIN 54500.

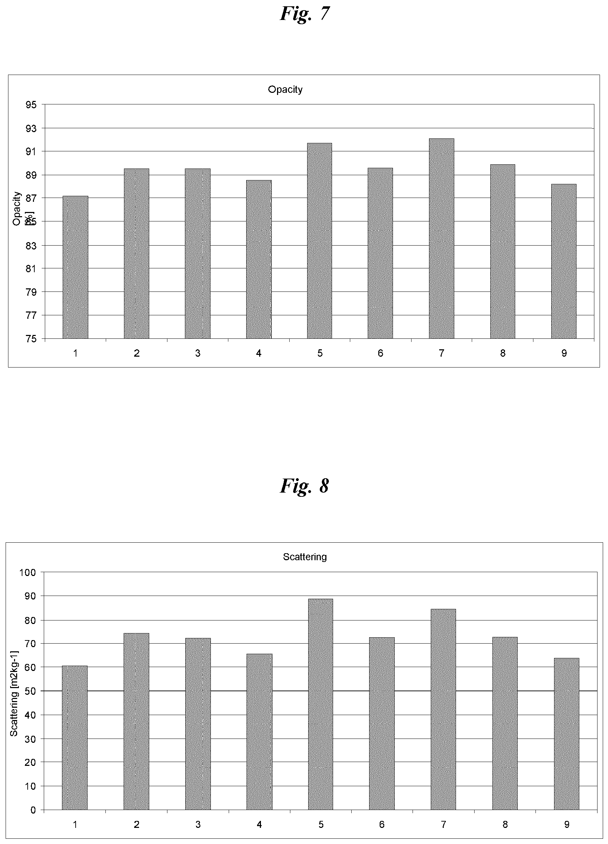

As can be taken from figures 7, 8, and 9, opacity (determined as grammage reduced opacity), light scattering, and light absorbency of comparative hand sheets No. 1 and 2 increase with increasing filler content.

Looking at the inventive hand sheets, it can be seen that any one of the hand sheets No. 3, 4, 6, 8 and 9 containing 30 wt% filler, but additional gel, have comparable or better opacity, light scattering, and light absorbency properties than comparative hand sheet No. 2.

Hand sheets No. 5 and 7 containing filler in an amount as high as 50 wt% and gel according to the invention have better opacity, light scattering, and light absorbency properties than the comparative hand sheets having a lower filler content.

### 3. Air Resistance

The air resistance was determined according to ISO 5636-1 / -3 .

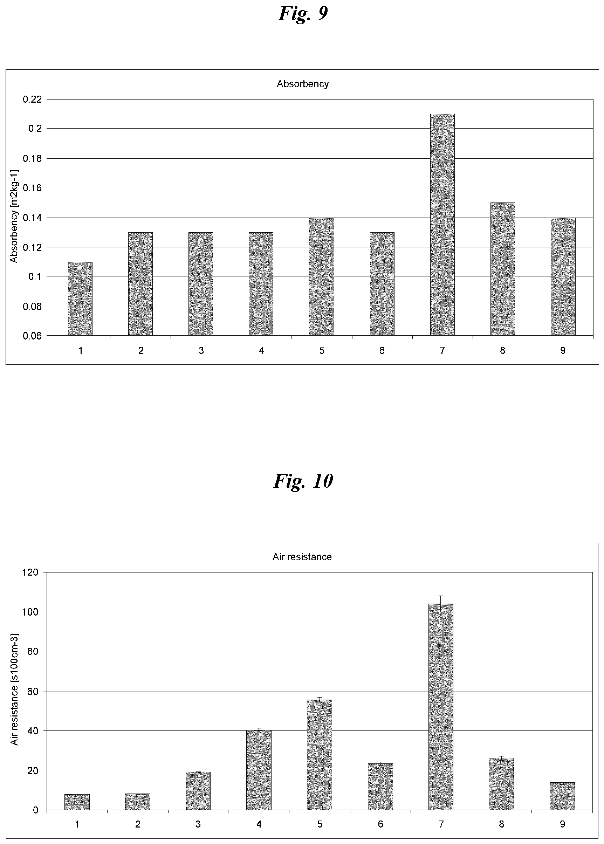

As can be taken from figure 10, air resistance of comparative hand sheets No. 1 and 2 are about the same or slightly increased with increasing filler content.

Looking at the inventive hand sheets, it can be seen that any one of the hand sheets No. 3, 4, 6, 8 and 9 containing 30 wt% filler, but additional gel, have significantly higher air resistance than comparative hand sheet No. 2.

In this respect, hand sheets No. 5 and 7 containing filler in an amount as high as 50 wt% and gel according to the invention have the highest air resistance.

### 2. Nano-fibrillar cellulosic gel with standard PCC fillers

### Material

### Filler (gel):

- Hydrocarb^{®} 60 AV (HC 60 AV) (dispersed product)
   available from Omya AG: Selected, natural ground calcium carbonate (marble), microcrystalline, rhombrohedral particle shape of high fineness in the form of a predispersed slurry. The weight median particle size *d*₅₀ is 1.6 µm, measured by Sedigraph 5100. Suspension solids = 78%.

### Pulp (gel):

Dried pine mats, brightness: 88.19% ; TCF bleached
Dried Eucalyptus, brightness: 88.77%; TCF bleached

### Filler (hand sheets):

- PCC (Precipitated calcium carbonate)
   available from Omya AG; scalenohedral particle shape with a dso of 2.4 µm measured by Sedigraph 5100. Specific Surface area: 3.2 m²/g; Suspension solids: 20 wt%; pH: 8.

### Pulp (hand sheets):

- 100% Eucalyptus refined to 30 °SR (TCF bleaching sequence; Brightness= 88.7%)

### Retention aid:

Polyimin 1530 (available from BASF)

### Gel Formation

The gels were processed with an ultra-fine friction grinder (Supermasscolloider from Masuko Sangyo Co. Ltd, Japan (Model MKCA 6-2) with mounted silicon carbide stones having a grit class of 46 (grit size 297 - 420 µm). The dynamic 0-point was adjusted as described in the manual delivered by the supplier (the zero point is defined as the touching point of the stones, so there the gap between the stones is 0 mm). The speed of the rotating grinder was set to 1500 rpm.

The suspensions to be fibrillated were prepared as follows: 80 g of the dry mat pulp was torn into pieces of 40 x 40 mm and 3920 g tap water were added. The pulp mats were soaked overnight in water. The next day, the suspensions were stirred in a 10 dm³ bucket at 2000 rpm using a dissolver disk with a diameter of 70 mm. The suspensions were stirred for at least 10 minutes at 2000 rpm.

At first, the pulp was disintegrated by passing it two times through the grinder with an open stone gap (0 µm). Subsequently, the stone gap was tightened to -200 µm for fibrillating the pulp in two passages. Filler (according to Table 3) was added to this fibrillated pulp suspension, and this mixture was ground by circulating three times with a stone gap of -300 to -400 µm.

**Table 3:**

| **Sample** | **Weight ratio (dry/dry) filler : pulp** | **Filler** | **Pulp** | **Cellulosic solid content [wt%]** |
|---|---|---|---|---|
| **G** | 2 :1 | HC-60 AV | Eucalyptus, dried | 2 |
| **H** | 2 :1 | HC-60 AV | Pine, dried | 2 |

### Hand sheet formation

60 g dry of eucalyptus pulp with a SR value of 30° and the according amount of the nanocellulosic gel (see table 4) is diluted in 10 dm³ of tap water. The filler (PCC FS 270 ET) is added in an amount so as to obtain the desired overall filler content based on the final paper weight (see table 4). After 15 minutes of agitation and following addition of 0.06% by dry weight, relative to the dry weight of the paper, of a polyacrylamide retention aid, a sheet with a grammage of 80 g/m² is formed using Rapid-Kothen type hand sheet former. Each sheet was wet pressed for 1 min.at 0.42 bar and dried using Rapid-Kothen type drier.

The filler content is determined by burning a quarter of a dry hand sheet in a muffle furnace heated to 570°C. After burning is completed, the residue is transferred in a desiccator to cool down. When room temperature is reached, the weight of the residue is measured and the mass is related to the initially measured weight of the dry quarter hand sheet.

**Table 4:**

| **Hand sheet No.** | **Basis weight [g/m²]** | **Pulp [wt%, dry/dry]** | **Ash (total filler content) [wt%]** | **Gel type (according to table 3) [wt%, dry/dry]** | |
|---|---|---|---|---|---|
| | | | | **G** | **H** |
| 10 (comparative) | 80 | 80.00 | 20 | | |
| 11 (comparative) | 80 | 75.00 | 25 | | |
| 12 (comparative) | 80 | 70.00 | 30 | | |
| 13 (comparative) | 80 | 65.00 | 35 | | |
| 14 (invention) | 80 | 75.38 | 23 | 1.62 | |
| 15 (invention) | 80 | 70.44 | 28 | 1.56 | |
| 16 (invention) | 80 | 65.50 | 33 | 1.50 | |
| 17 (invention) | 80 | 62.03 | 35 | 2.97 | |
| 18 (invention) | 80 | 74.39 | 24 | | 1.61 |
| 19 (invention) | 80 | 68.46 | 30 | | 1.54 |
| 20 (invention) | 80 | 63.52 | 35 | | 1.48 |

### Hand sheet testing

As in the case of hand sheets combining nano-fibrillar cellulosic gel with standard GCC fillers, comparable effects on mechanical, optical and penetration and printing properties were found when the filler added to the hand sheets was a standard PCC filler.

Thus, mechanical properties as well as printing and penetration properties (expressed by the air permeance of the respective hand sheets) could be significantly improved at comparable optical properties.

The hand sheets were tested and characterized as follows:

### 1. Mechanical Properties

The mechanical properties of the hand sheets according to the invention were characterized by their breaking length, stretch at rupture, tensile index, tear growth work, and internal bond.

Breaking length, stretch at rupture, and tensile index of the hand sheets were determined by the tensile test according to ISO 1924-2. Tear growth work was determined according to DIN 53115. Internal bond was determined according to SCAN-P80:98 / TAPPI T 541 om.

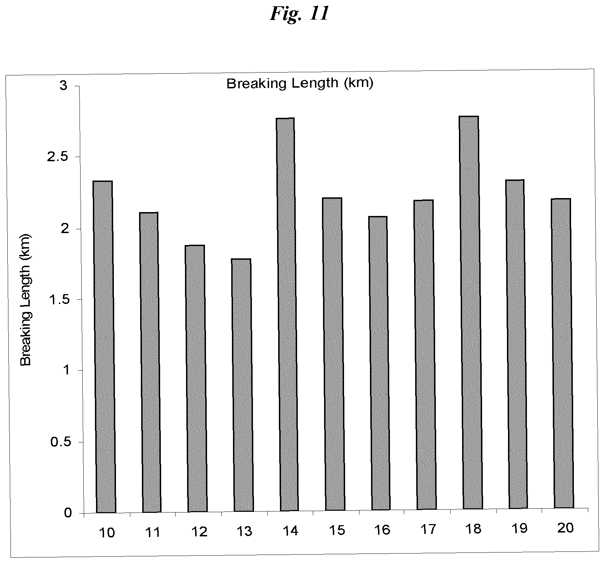

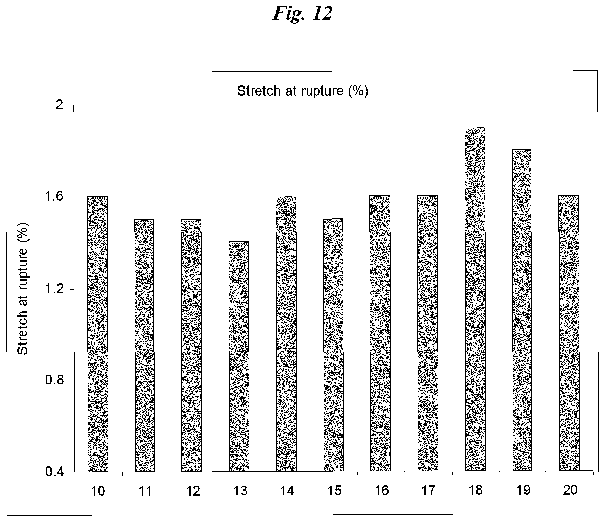

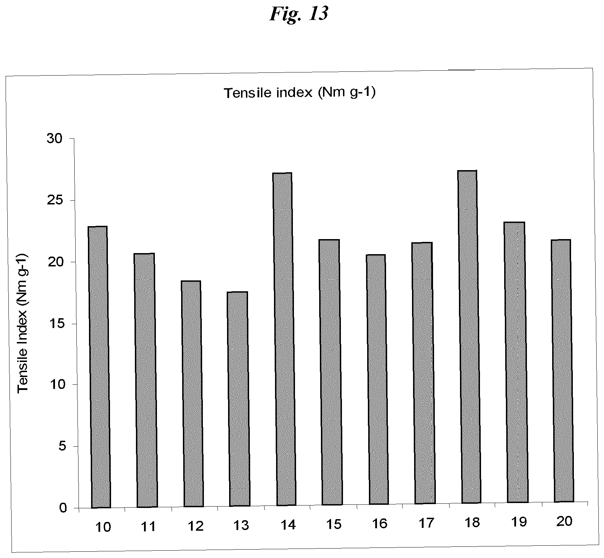

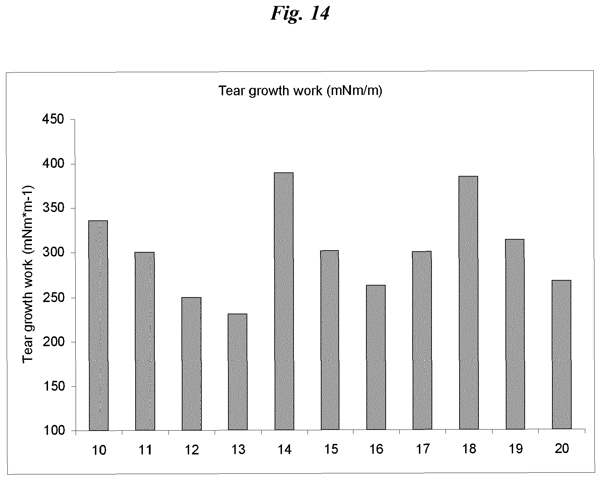

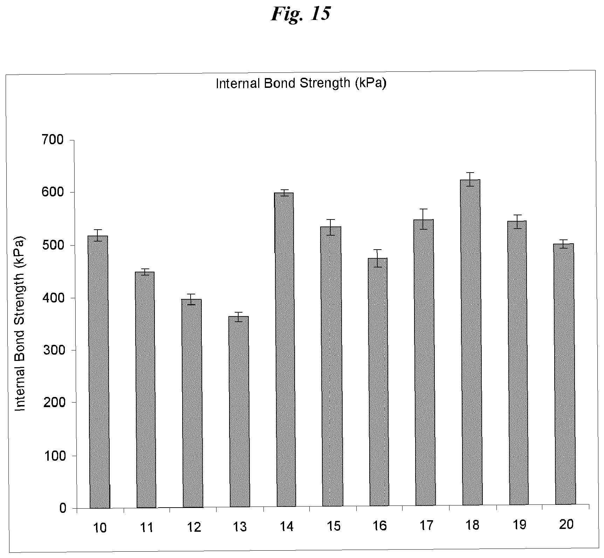

As can be taken from figures 11, 12, 13, 14 and 15, breaking length, stretch at rupture, tensile index, tear growth work, and internal bond values of comparative hand sheets No. 10 - 13 essentially decrease with increasing filler content.

Looking at the inventive hand sheets, it can be seen that any one of the hand sheets No. 14 - 20 containing corresponding amounts of filler, but additional gel, have better breaking lengths, stretch at rupture, tensile index, tear growth work, and internal bond properties than the corresponding comparative hand sheets.

### 2. Optical Properties

The optical properties of the hand sheets according to the invention were characterized by their opacity and light scattering.

Opacity of the hand sheets was determined according to DIN 53146. Light scattering was determined according to DIN 54500.

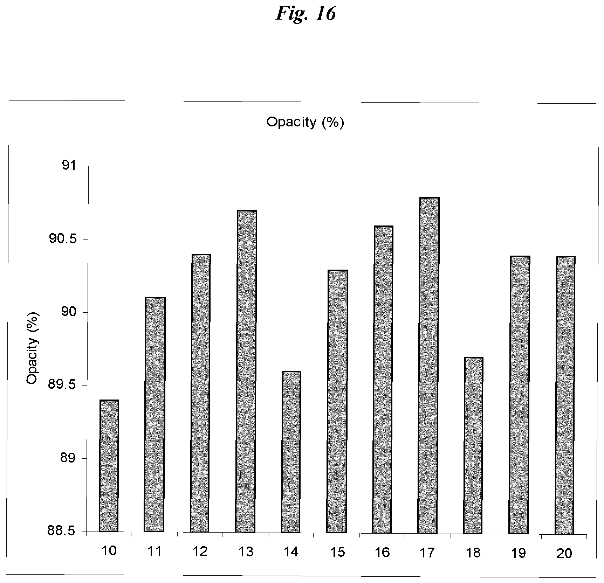

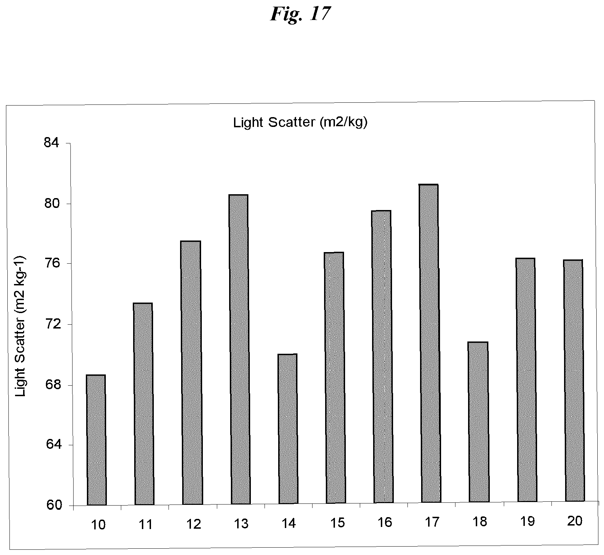

As can be taken from figures 16 and 17, opacity and light scattering of comparative hand sheets No. 10 - 13 increase with increasing filler content.

Looking at the inventive hand sheets, it can be seen that any one of hand sheets No. 14 - 20 containing corresponding amounts of filler, but additional gel, have comparable or better opacity and light scattering properties than the corresponding comparative hand sheets.

### 3. Air permeance

The air permeance was determined according to ISO 5636-1 / -3.

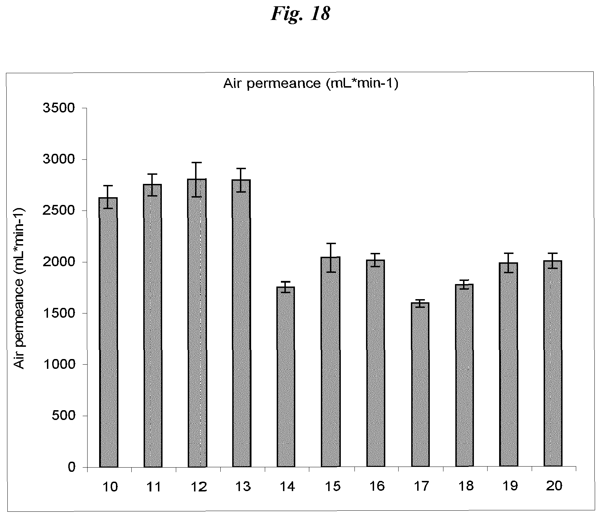

As can be seen from figure 18, air permeance of comparative hand sheets No. 10 - 13 is about the same or slightly increased with increasing filler content.

Looking at the inventive hand sheets, it can be seen that any one of hand sheets No. 14 - 20 containing corresponding amounts of filler, but additional gel, have significantly lower air permeance than the corresponding comparative hand sheets.

### 4. Bendtsen roughness

The Bendsten roughness was determined according to ISO 8791-2.

A low surface roughness is of advantage for the calendering properties. A lower surface roughness means that less pressure has to be applied for calendering.

As can be taken from figure 18, the Bendtsen roughness of comparative hand sheets No. 10 - 13 decreases with increasing filler content. However, looking at the inventive hand sheets, it can be seen that any one of hand sheets No. 14 - 20 containing corresponding amounts of filler, but additional gel, have a comparable or lower Bendtsen roughness than the corresponding comparative hand sheet, and thus provide a low surface roughness.

In embodiments, the invention may provide a process for manufacturing structured material, characterized by the steps of:
(a) providing cellulose fibres;
(b) providing at least one filler comprising at least one filler and/or pigment
(c) combining the cellulose fibres of step a) and the at least one filler of step b);
(d) fibrillating the cellulose fibres in an aqueous environment in the presence of the at least one filler from step c) until a nano-fibrillar gel is formed, wherein the formation of the gel is verified by monitoring the viscosity of the mixture in dependence of the shearing rate, wherein the viscosity decrease of the mixture upon step-wise increase of the shearing rate is larger than the corresponding viscosity increase upon subsequent step-wise reduction of the shearing rate over at least part of the shear rate range as shearing approaches zero;
(e) providing additional non-fibrillated fibres in the form of a fibre web;
(f) combining the gel of step d) with the non-fibrillated fibres in the form of a fibre web of step e)
   so that the combination of the nano-fibrillar gel and the non-fibrillated fibres includes 0.5 to 20 wt% of the nano-fibrillar gel, expressed by the cellulosic content of the nano-fibrillar gel, on a dr/dry basis; and
(g) manufacturing a structured material from the combination of the nano-fibrillar gel and the non-fibrillated fibres in the form of a fibre web.

In further embodiments, the combination of the nano-fibrillar gel and the non-fibrillated fibres in the form of a fibre web from step f) is dewatered in dewatering step.

In further embodiments, the cellulose fibres of steps a) and/or e) are independently selected from such contained in pulps selected from the group comprising in eucalyptus pulp, spruce pulp, pine pulp, beech pulp, hemp pulp, cotton pulp, bamboo pulp, bagasse, as well as recycled and/or deinked pulp, and mixtures thereof.

In further embodiments, the cellulose fibres of step a) are provided in the form of a suspension.

In further embodiments, the cellulose fibres of step a) are provided in the form of a suspension, preferably having a solids content of from 0.2 to 35 wt%, more preferably 0.25 to 10 wt%, even more preferably 0.5 to 5 wt%, especially 1 to 4 wt%, most preferably 1.3 to 3 wt%, e.g. 1.5 wt%.

In further embodiments, the filler of step b) is selected from the group comprising precipitated calcium carbonate (PCC), natural ground calcium carbonate (GCC), surface modified calcium carbonate; dolomite; talc; bentonite; clay; magnesite; satin white; sepiolite, huntite, diatomite; silicates; and mixtures thereof; and preferably is selected from the group of precipitated calcium carbonate having vateritic, calcitic or aragonitic crystal structure, especially ultrafine discrete prismatic, scalenohedral or rhombohedral precipitated calcium carbonate; natural ground calcium carbonate being selected from marble, limestone and/or chalk; and mixtures thereof.

In further embodiments, the filler of step b) is calcium carbonate.

In further embodiments, the filler and/or pigment particles of step b) have a 0.01 to 15 µm, preferably 0.1 to 10 µm, more preferably 0.3 to 5 µm, especially from 0.5 to 4 µm and most preferably 0.7 to 3.2 µm, e.g. 2 µm.

In further embodiments, before, during or after the addition of the further non-fibrillated fibres in the form of a fibre web in step e), but after step d) and before step f), at least one further filler is added.

In further embodiments, before, during or after the addition of further fibres in step e), but after step d) and before step f), at least one further filler is added, which is preferably selected from the group comprising precipitated calcium carbonate; natural ground calcium carbonate; surface modified calcium carbonate; dolomite; talc; bentonite; clay; magnesite; satin white; sepiolite, huntite, diatomite; silicates; and mixtures thereof; and preferably is selected from the group of precipitated calcium carbonate having vateritic, calcitic or aragonitic crystal structure, especially ultrafine discrete prismatic, scalenohedral or rhombohedral precipitated calcium carbonate; natural ground calcium carbonate being selected from marble, limestone and/or chalk; and mixtures thereof.

In further embodiments, the at least one further filler particles have a median particle size of from 0.01 to 5 µm, preferably 0.05 to 1.5 µm, more preferably 0.1 to 0.8 µm and most preferably 0.2 to 0.5 µm, e.g. 0.3 µm.

In further embodiments, the filler of step b) and/or the at least one further filler is associated with dispersing agents selected from the group comprising homopolymers or copolymers of polycarboxylic acids and/or their salts or derivatives such as esters based on, e.g., acrylic acid, methacrylic acid, maleic acid, fumaric acid, itaconic acid; e.g. acryl amide or acrylic esters such as methylmethacrylate, or mixtures thereof; alkali polyphosphates, phosphonic-, citric- and tartaric acids and the salts or esters thereof; or mixture thereof.

In further embodiments, the combination of fibres and of the at least one filler of step b) is carried out by adding the filler to the fibres, or the fibres to the filler in one or several steps.

In further embodiments, the filler of step b) and/or the fibres of step a) are added entirely or in portions before or during the fibrillating step (d), preferably before the fibrillation step (d).

In further embodiments, the weight ratio of fibres to filler and/or pigment of step b) on a dry weight basis is from 1:33 to 10:1, more preferably 1:10 to 7:1, even more preferably 1:5 to 5:1, typically 1:3 to 3:1, especially 1:2 to 2:1 and most preferably 1:1.5 to 1.5:1, e.g. 1:1.

In further embodiments, the fibrillating is carried out by means of a homogenizer or an ultra fine friction grinder.

In further embodiments, the combination of the nano-fibrillar gel and the non-fibrillated fibres in the form of a fibre web includes about 0.5 to 20 wt%, preferably 1 to 15 wt%, 2 to 10 wt%, 3 to 6 wt%, e.g. 5 wt% of the nano-fibrillar gel, expressed as the cellulosic content of the gel, on dry/dry weight basis.

In further embodiments, the total content of filler on a dry weight basis of the structured material is from 1 wt% to 60 wt%, preferably from 5 wt% to 50 wt%, more preferably from 10 to 45 wt%, even more preferably from 25 wt% to 40 wt%, especially from 30 to 35 wt%.

In further embodiments, the structured material is a paper.

The invention may further provide a structured material obtained by the process according to the invention, which preferably is a paper.

## Claims

1. A process for manufacturing structured material,
**characterized by** the steps of:
(a) providing cellulose fibres;
(b) providing at least one filler comprising at least one filler and/or pigment
(c) combining the cellulose fibres of step a) and the at least one filler of step b);
(d) fibrillating the cellulose fibres in an aqueous environment in the presence of the at least one filler from step c) until a nano-fibrillar gel is formed;
(e) providing additional non-fibrillated fibres in the form of a fibre web;
(f) combining the gel of step d) with the non-fibrillated fibres in the form of a fibre web of step e) so that the combination of the nano-fibrillar gel and the non-fibrillated fibres includes 0.5 to 20 wt% of the nano-fibrillar gel, expressed by the cellulosic content of the nano-fibrillar gel, on a dry/dry basis; and
(g) manufacturing a structured material from the combination of the nano-fibrillar gel and the non-fibrillated fibres in the form of a fibre web and subsequently dewatering the combination,
wherein the cellulose fibres of steps a) and/or e) are independently selected from such contained in pulps selected from the group comprising recycled and/or deinked pulp.

2. The process according to claim 1,
**characterized in that** the combination of the nano-fibrillar gel and the non-fibrillated fibres in the form of a fibre web from step f) is dewatered in a dewatering step.

3. The process according to any one of the preceding claims,
**characterized in that** the cellulose fibres of step a) are provided in the form of a suspension, preferably having a solids content of from 0.2 to 35 wt%, more preferably 0.25 to 10 wt%, even more preferably 0.5 to 5 wt%, especially 1 to 4 wt%, most preferably 1.3 to 3 wt%, e.g. 1.5 wt%.

4. The process according to any of the preceding claims, wherein before, during or after the addition of the further non-fibrillated fibres in the form of a fibre web in step e), but after step d) and before step f), at least one further filler is added.

5. The process according to any one of the preceding claims,
**characterized in that** the filler of step b) and/or the at least one further filler of claim 4 is selected from the group comprising precipitated calcium carbonate; natural ground calcium carbonate; surface modified calcium carbonate; dolomite; talc; bentonite; clay; magnesite; satin white; sepiolite, huntite, diatomite; silicates; and mixtures thereof; and preferably is selected from the group of precipitated calcium carbonate having vateritic, calcitic or aragonitic crystal structure, especially ultrafine discrete prismatic, scalenohedral or rhombohedral precipitated calcium carbonate; natural ground calcium carbonate being selected from marble, limestone and/or chalk; and mixtures thereof.

6. The process according to claim 5,
**characterized in that** the filler of step b) and/or the at least one further filler of claim 4 is calcium carbonate in the form of ultrafine discrete prismatic, scalenohedral or rhombohedral precipitated calcium carbonate.

7. The process according to any one of the preceding claims,
**characterized in that** the filler and/or pigment particles of step b) have a median particle size of from 0.01 to 15 µm, preferably 0.1 to 10 µm, more preferably 0.3 to 5 µm, especially from 0.5 to 4 µm and most preferably 0.7 to 3.2 µm, e.g. 2 µm.

8. The process according to any one of the claims 4 to 6,
**characterized in that** the at least one further filler particles have a median particle size of from 0.01 to 5 µm, preferably 0.05 to 1.5 µm, more preferably 0.1 to 0.8 µm and most preferably 0.2 to 0.5 µm, e.g. 0.3 µm.

9. The process according to any one of the preceding claims,
**characterized in that** the filler of step b) and/or the at least one further filler is associated with dispersing agents selected from the group comprising homopolymers or copolymers of polycarboxylic acids and/or their salts or derivatives such as esters based on, e.g., acrylic acid, methacrylic acid, maleic acid, fumaric acid, itaconic acid; e.g. acryl amide or acrylic esters such as methylmethacrylate, or mixtures thereof; alkali polyphosphates, phosphonic-, citric- and tartaric acids and the salts or esters thereof; or mixture thereof.

10. The process according to any one of the preceding claims,
**characterized in that** the combination of fibres and of the at least one filler of step b) is carried out by adding the filler to the fibres, or the fibres to the filler in one or several steps.

11. The process according to any one of the preceding claims,
**characterized in that** the filler of step b) and/or the fibres of step a) are added entirely or in portions before or during the fibrillating step (d), preferably before the fibrillation step (d).

12. The process according to any one of the preceding claims,
**characterized in that** the weight ratio of fibres to filler and/or pigment of step b) on a dry weight basis is from 1:33 to 10:1, more preferably 1:10 to 7:1, even more preferably 1:5 to 5:1, typically 1:3 to 3:1, especially 1:2 to 2:1 and most preferably 1:1.5 to 1.5:1, e.g. 1:1.

13. The process according to any one of the preceding claims,
**characterized in that** the fibrillating is carried out by means of a homogenizer or an ultra fine friction grinder.

14. The process according to any one of the preceding claims,
**characterized in that** the combination of the gel and the non-fibrillated fibres in the form of a fibre web includes about 0.5 to 20 wt%, preferably 1 to 15 wt%, 2 to 10 wt%, 3 to 6 wt%, e.g. 5 wt% of the gel, expressed as the cellulosic content of the gel, on dry/dry weight basis.

15. The process according to any one of claims 13 or 14,
**characterized in that** the total content of filler on a dry weight basis of the structured material is from 1 wt% to 60 wt%, preferably from 5 wt% to 50 wt%, more preferably from 10 to 45 wt%, even more preferably from 25 wt% to 40 wt%, especially from 30 to 35 wt%.

16. The process according to any one of the preceding claims,
**characterized in that** the structured material is a paper.

17. The process according to any one of the preceding claims,
**characterized in that** the structured material comprises a fiber layer having a thickness of 0.02 to 0.23 mm, and one or more gel layers having a thickness of 0.005 to 0.15 mm, and has a total thickness of 0.05 to 0.25 mm.

18. A structured material obtained by the process according to any one of claim 1 to 17, which preferably is a paper.
